# EUROPÄISCHE PATENTSCHRIFT

(11) **EP 2 095 931 B1**
(45) Veröffentlichungstag und Bekanntmachung des Hinweises auf die Patenterteilung: **14.03.2012**
(21) Anmeldenummer: 09151706.0
(22) Anmeldetag: 30.01.2009
(51) Int. Cl.: B29D 30/06, B29C 33/02

(54) **Vorrichtung zum Vulkanisieren von Fahrzeugreifen mit einer Vulkanisationsform**
Device for vulcanizing vehicle tyres with a vulcanizing mould
Dispositif de vulcanisation de pneumatiques pour véhicules à l'aide d'un moule de vulcanisation

(30) Priorität: 01.03.2008 DE 102008012045
(43) Veröffentlichungstag der Anmeldung: 02.09.2009
(73) Patentinhaber: Continental Reifen Deutschland GmbH, 30165 Hannover (DE)
(72) Erfinder: Behr, Ulrich, 30169 Hannover (DE); Fischer, Markus, 30823 Garbsen (DE); Rötter, Wolfgang, 30457 Hannover (DE)
(74) Vertreter: Finger, Karsten

(56) Entgegenhaltungen:
- EP-A- 0 548 703
- EP-A- 1 066 941
- EP-A- 1 232 843
- JP-A- 10 067 056

## Beschreibung

Die Erfindung betrifft eine Vorrichtung zum Vulkanisieren von Fahrzeugreifen mit einem Vulkanisationsbalg.

Die Reifenvulkanisation erfolgt in Heizpressen, bei der der Reifenrohling in geeignete Formsegmente eingesetzt und unter Einwirkung von Wärme sowie Druck vulkanisiert wird.

Vulkanisierformen für Reifen bestehen unter anderem aus Formsegmenten, welche gemeinsam die radial äußere Oberfläche des Reifens, wie den Laufstreifen, den Schulterbereich, die Seitenwände und den Wulstbereich formen.

Die Formsegmente der Vulkanisierformen für Reifen sind aus Metall gefertigt, üblicherweise aus Stahl oder Aluminium. Die Formteile werden durch Gießverfahren oder durch direkte Fräsverfahren aus Vollmaterialien hergestellt.

Der unvulkanisierte grüne Reifenrohling wird in der Vulkanisierform heizgepresst und durch Kautschukvernetzungsreaktionen in seinen endgültigen gummielastischen Zustand überführt. Dabei erhält der Reifen seine Profil- und Seitenwandgestaltung durch die entsprechende Negativgestaltung der Formflächen der Formsegmente.

Ein Problem bei der Reifenvulkanisation ist mit der Entlüftung beim Zusammenfahren der Formsegmente verbunden. Aufgrund von Lufteinschlüssen in den Formsegmenten kann die Fertigungsqualität von Fahrzeugreifen beeinträchtigt werden.

Die EP 1232843 - A offenbart eine Vorrichtung zum Vulkanisieren von Fahrzeugreifen. Die Formsegmente weisen auf der Innenseite Rillen auf, mit denen Lufteinschlüsse in der Form vermieden werden sollen.

Der Erfindung liegt die Aufgabe zugrunde, eine Vorrichtung zum Vulkanisieren von Fahrzeugreifen bereitzustellen, bei dem Fahrzeugreifen aufgrund eines optimierten Entlüftungssystems mit einer hohen Fertigungsqualität erzeugt werden.

Gelöst wird die Aufgabe gemäß dem Oberbegriff und den kennzeichnenden Merkmalen von Anspruch 1 dadurch, dass vereinzelt Entlüftungsventile an Kreuzungspunkten von Entlüftungsrillen der Formsegmente angeordnet sind, wodurch eine gezielte Entlüftung an diesen Kreuzungspunkten in der Vulkanisationsform erfolgt.

Vorteilhafte Ausgestaltungen der Erfindung sind Gegenstand der abhängigen Ansprüche.

Ein Vorteil der Erfindung ist insbesondere darin zu sehen, dass durch Kombination von Entlüftungsrillen und Entlüftungsventilen ein optimales Entlüftungssystem erreicht wird. Lufteinschlüsse in den Formsegmenten werden auf diese Weise zunächst in den Entlüftungsrillen gesammelt und dann gezielt zu den Entlüftungsventilen hingeführt, wo anschließend die Luft durch entsprechende Kanäle abgeführt werden kann. Ein weiterer Vorteil besteht also darin, dass bei diesem Entlüftungssystem nur eine geringe Anzahl von Entlüftungsventilen notwendig ist.

In einer vorteilhaften Weiterbildung der Erfindung ist vorgesehen, dass die Entlüftungsrillen in einer regelmäßigen Struktur angeordnet sind. Eine derartige regelmäßige Struktur der Entlüftungsrillen lässt sich auf eine einfache Art und Weise in die Formsegmente der Vulkanisationsform einbringen.

In einer weiteren vorteilhaften Weiterbildung der Erfindung ist vorgesehen, dass die Entlüftungsrillen in einer im Wesentlichen rautenförmigen Struktur angeordnet sind. Durch die rautenförmige Struktur lässt sich ein engmaschiges Netz von Entlüftungsrillen erzeugen.

In einer weiteren vorteilhaften Weiterbildung der Erfindung ist vorgesehen, dass die Entlüftungsrillen in einer im Wesentlichen schachbrettartigen Struktur angeordnet sind. Eine schachbrettartige Struktur ist einfach in die Formsegmente einbringbar.

In einer weiteren vorteilhaften Weiterbildung der Erfindung ist vorgesehen, dass die Anordnung der Entlüftungsrillen in den Formsegmenten asymmetrisch ist. Auf diese Weise lässt sich das Entlüftungssystem auf einfache Weise optimieren. In einigen Teilbereichen des Reifenprofils ist beispielsweise eine intensivere Entlüftung notwendig als gegenüber anderen Teilbereichen des Profils.

In einer weiteren vorteilhaften Weiterbildung der Erfindung ist vorgesehen, dass die Abstände der Entlüftungsrillen parallel zueinander variiert. Die Abstände der Entlüftungsrillen sind ein geeigneter Parameter, um das gesamte Entlüftungssystem zu optimieren.

In einer weiteren vorteilhaften Weiterbildung der Erfindung ist vorgesehen, dass die Entlüftungsventile im Wesentlichen in regelmäßigen Abständen zueinander in den Formsegmenten angeordnet sind. Auf diese Weise wird sichergestellt, dass eingeschlossene Luft in allen Bereichen der Formsegmente optimal entweichen kann.

In einer weiteren vorteilhaften Weiterbildung der Erfindung ist vorgesehen, dass jedem zu vulkanisierenden Profilblock im Wesentlichen zumindest ein Entlüftungsventil in den Formsegmenten zuzuordnen ist. Insbesondere bei den Profilblöcken muss sichergestellt werden, dass dortige Lufteinschlüsse nicht auftreten können.

Anhand eines Ausführungsbeispieles soll die Erfindung näher erläutert werden.

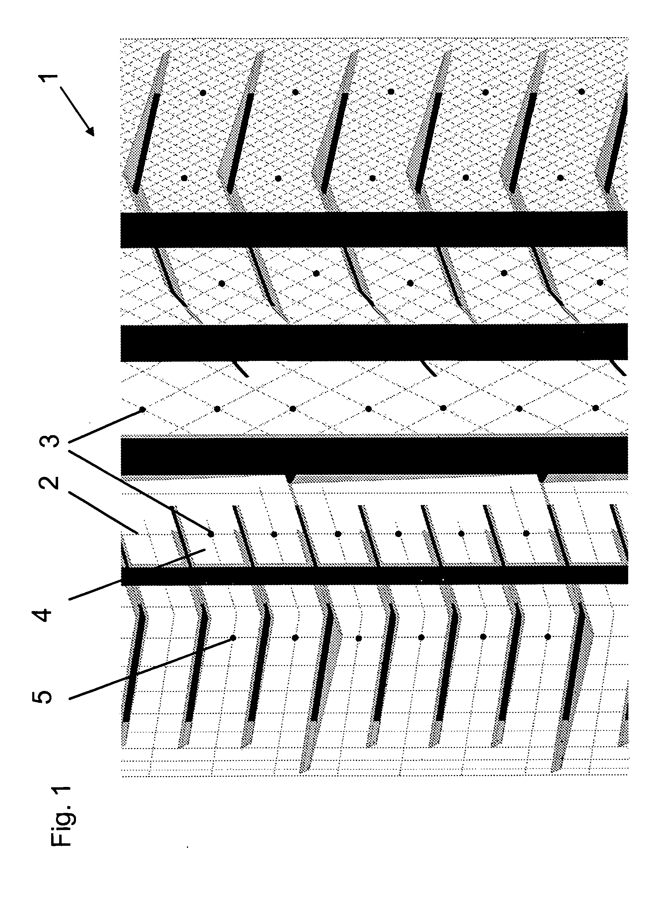

Fig. 1 zeigt eine Aufsicht in den Teilbereich der Vulkanisationsform 1, der den entsprechenden Positivabdruck im Laufstreifen des herzustellenden Fahrzeugreifens erzeugt. Der Teilbereich 1 der Vulkanisationsform ist in einem zusammengefahrenen Zustand dargestellt, wobei einzelne Formsegmente nicht dargestellt sind.

Es handelt sich bei dieser Figur somit um eine Aufsicht von der Mitte der Vulkanisationsform auf die Formsegmente, mit denen das entsprechende Reifenprofil erzeugt wird. Die Entlüftungsrillen 2 sind der Figur als schmale Linien zu erkennen und jeweils in einer regelmäßigen Struktur angeordnet. Im linken Bereich der Figur 1 sind die Entlüftungsrillen 2 in einer schachbrettartigen Struktur angeordnet.

Im restlichen Bereich der Vulkanisationsform liegt eine rautenförmige Struktur vor. Die Entlüftungsventile 3 sind als schwarze runde Punkte dargestellt und jeweils an Kreuzungspunkten von Entlüftungsrillen 2 angeordnet. Die Entlüftungsventile 3 sind mit Kanälen in der Vulkanisationsform verbunden, durch die überschüssige Luft abgeführt wird.

Wie der Fig. 1 entnehmbar ist, sind die Entlüftungsrillen insgesamt asymmetrisch angeordnet, d.h. auf der linken Seite sind die Entlüftungsrillen schachbrettartig und auf der rechten Seite im Wesentlichen rautenförmig angeordnet. Des Weiteren variiert der Abstand der Entlüftungsrillen zueinander. Die Entlüftungsventile 3 sind im Wesentlichen in regelmäßigen Abständen zueinander in der Vulkanisationsform angeordnet. Ferner ist jedem Profilblock zumindest ein Entlüftungsventil 3 zugeordnet. Durch die Kombination von Entlüftungsrillen 2 mit Entlüftungsventilen 3 lässt sich die notwendige Anzahl von Entlüftungsventilen 3 erheblich reduzieren. Die Entlüftungsrillen 2 wirken sozusagen als Entlüftungskanäle durch die abzuführende Luft gezielt zu den Entlüftungsventilen hingeleitet wird. Auf diese Weise können die Entlüftungsventile 3 einen insgesamt großen Bereich der Vulkanisationsform abdecken.

### Bezugszeichenliste

### (ist Teil der Beschreibung)

- 1: Teilbereich der Vulkanisationsform
- 2: Entlüftungsrillen
- 3: Entlüftungsventile
- 4: Profilblock
- 5: Kreuzungspunkt von Entlüftungsrillen

## Patentansprüche

1. Vorrichtung zum Vulkanisieren von Fahrzeugreifen mit einer Vulkanisationsform, wobei die Vulkansisationsform eine Vielzahl von Formsegmenten mit einem Entlüftungssystem (2, 3) umfasst,
wobei beim Zusammenfahren der Formsegmente ein Laufstreifenprofil in den zu vulkanisierenden Fahrzeugreifen eingeprägt wird,
wobei über das Entlüftungssystem (2,3) Lufteinschlüsse in der Vulkansisationsform vermieden werden,
**dadurch gekennzeichnet, dass**
vereinzelt Entlüftungsventile (3) an Kreuzungspunkten (5) von Entlüftungsrillen (2) der Formsegmente angeordnet sind, wodurch eine gezielte Entlüftung an diesen Kreuzungspunkten (5) in der Vulkanisationsform erfolgt.

2. Vorrichtung nach Anspruch 1,
**dadurch gekennzeichnet, dass**
die Entlüftungsrillen (2) in einer regelmäßigen Struktur angeordnet sind.

3. Vorrichtung nach Anspruch 1 oder 2,
**dadurch gekennzeichnet, dass**
die Entlüftungsrillen (2) in einer im Wesentlichen rautenförmigen Struktur angeordnet sind.

4. Vorrichtung nach einem der vorhergehenden Ansprüche,
**dadurch gekennzeichnet, dass**
die Entlüftungsrillen (2) in einer im Wesentlichen schachbrettartigen Struktur angeordnet sind.

5. Vorrichtung nach einem der vorhergehenden Ansprüche,
**dadurch gekennzeichnet, dass**
die Anordnung der Entlüftungsrillen (2) in den Formsegmenten asymmetrisch ist.

6. Vorrichtung nach einem der vorhergehenden Ansprüche,
**dadurch gekennzeichnet, dass**
die Abstände der Entlüftungsrillen (2) parallel zueinander variiert.

7. Vorrichtung nach einem der vorhergehenden Ansprüche,
**dadurch gekennzeichnet, dass**
die Entlüftungsventile (3) im Wesentlichen in regelmäßigen Abständen zueinander in den Formsegmenten angeordnet sind.

8. Vorrichtung nach einem der vorhergehenden Ansprüche,
**dadurch gekennzeichnet, dass**
jedem zu vulkanisierenden Profilblock (4) im Wesentlichen zumindest ein Entlüftungsventil (3) in den Formsegmenten zuzuordnen ist.

## Claims

1. Device for vulcanizing vehicle tyres with a vulcanizing mould, the vulcanizing mould comprising a multiplicity of mould segments with a venting system (2, 3),
a tread rubber profile being impressed in the vehicle tyre to be vulcanized when the mould segments are moved together,
the venting system (2, 3) having the effect of avoiding entrapped air in the vulcanizing mould, **characterized in that**
isolated venting valves (3) are arranged at crossing points (5) of venting grooves (2) of the mould segments, whereby selective venting takes place at these crossing points (5) in the vulcanizing mould.

2. Device according to Claim 1, **characterized in that** the venting grooves (2) are arranged in a regular structure.

3. Device according to Claim 1 or 2, **characterized in that** the venting grooves (2) are arranged in an essentially rhomboidal structure.

4. Device according to one of the preceding claims, **characterized in that** the venting grooves (2) are arranged in an essentially chequerboard-like structure.

5. Device according to one of the preceding claims, **characterized in that** the arrangement of the venting grooves (2) in the mould segments is asymmetric.

6. Device according to one of the preceding claims, **characterized in that** the distances between the venting grooves (2) parallel to one another varies.

7. Device according to one of the preceding claims, **characterized in that** the venting valves (3) are arranged essentially at regular distances from one another in the mould segments.

8. Device according to one of the preceding claims, **characterized in that** each profile block (4) to be vulcanized can essentially be assigned at least one venting valve (3) in the mould segments.

## Revendications

1. Dispositif de vulcanisation de bandages de roues de véhicules à l'aide d'un moule de vulcanisation,
le moule de vulcanisation comportant plusieurs segments de moule dotés d'un système (2, 3) d'évacuation d'air,
un profil de bande roulement étant imprimé dans le bandage de roue de véhicule à vulcaniser lors du rapprochement des segments de moule,
le système (2, 3) d'évacuation d'air évitant la formation d'inclusions d'air dans le moule de vulcanisation,
**caractérisé en ce que**
différentes soupapes (3) d'évacuation d'air sont disposées aux points de croisement (5) de rainures (2) d'évacuation d'air des segments de moule, ce qui permet d'obtenir une certaine évacuation de l'air du moule de vulcanisation en ces points de croisement (5).

2. Dispositif selon la revendication 1, **caractérisés en ce que** les rainures (2) d'évacuation d'air sont disposées en une structure régulière.

3. Dispositif selon les revendications 1 ou 2, **caractérisé en ce que** les rainures d'évacuation d'air (2) sont disposées en une structure essentiellement en losange.

4. Dispositif selon l'une des revendications précédentes, **caractérisé en ce que** les rainures d'évacuation d'air (2) sont disposées en une structure essentiellement en damier.

5. Dispositif selon l'une des revendications précédentes, **caractérisé en ce que** l'agencement des rainures d'évacuation d'air (2) dans les segments de moule est asymétrique.

6. Dispositif selon l'une des revendications précédentes, **caractérisé en ce que** les distances entre les rainures d'évacuation d'air (2) varient parallèlement les unes aux autres.

7. Dispositif selon l'une des revendications précédentes, **caractérisé en ce que** les soupapes (3) d'évacuation d'air sont disposées à distance mutuelle essentiellement régulière dans les segments de moule.

8. Dispositif selon l'une des revendications précédentes, **caractérisé en ce qu'**au moins une soupape d'évacuation d'air (3) est associée dans les segments de moule essentiellement à chaque bloc profilé (4) à vulcaniser.
